# EUROPÄISCHE PATENTSCHRIFT

(11) **EP 1 731 730 B1**
(45) Veröffentlichungstag und Bekanntmachung des Hinweises auf die Patenterteilung: **14.10.2015**
(21) Anmeldenummer: 06008250.0
(22) Anmeldetag: 21.04.2006
(51) Int. Cl.: F02B 27/02, F02B 27/00

(54) **Reflexionsaufladeeinrichtung**
Reflector charging device
Dispositif de charge à réflexion

(30) Priorität: 10.06.2005 DE 102005026835
(43) Veröffentlichungstag der Anmeldung: 13.12.2006
(73) Patentinhaber: Dr. Ing. h.c. F. Porsche AG, 70435 Stuttgart (DE)
(72) Erfinder: Stromsky, Roland-Gerhard, 71691 Freiberg (DE); Storz, Eberhard, 74366 Kirchheim (DE)

(56) Entgegenhaltungen:
- DE-A1- 4 439 704
- GB-A- 2 203 488
- GB-A- 2 258 496
- JP-A- 61 076 722
- JP-A- 62 067 224

## Beschreibung

Die vorliegende Erfindung betrifft eine Reflexionsaufladeeinrichtung für einen Kolbenmotor, insbesondere in einem Kraftfahrzeug.

Zur Leistungssteigerung von Kolbenmotoren ist es allgemein bekannt, bei den Ladungswechselvorgängen die Brennräume des Kolbenmotors aufzuladen. Hierzu existieren viele Aufladungskonzepte. Allgemein bekannt sind mechanische Lader oder Kompressoren sowie Abgasturbolader. Ebenso ist eine Schwingrohraufladung bekannt, bei der sich im Betrieb des Kolbenmotors im Frischlufttrakt ausbildende Schwingungen zur Verbesserung der Aufladung genutzt werden. Hierbei kommen unterschiedlich lange Saugrohre zum Einsatz, wobei kürzere Saugrohre als Leistungsrohre bei relativ hohen Drehzahlen die Aufladung verbessern, während längere Saugrohre als Drehmomentrohre bei niedrigeren Drehzahlen des Kolbenmotors die Aufladung verbessern. Desweiteren gibt es Resonanzaufladung, die mit Eigenfrequenzen, die sich in dem durch den Frischlufttrakt gebildeten schwingungsfähigen System ausbilden, arbeitet. Darüber hinaus gibt es die sogenannte Impulsaufladung, bei der durch schnelles Öffnen und Schließen des Frischlufttrakts Druckimpulse erzeugt werden können, die ebenfalls zur Verbesserung der Aufladung der Brennräume nutzbar sind.

Die Aufladung mittels mechanischer Lader, Kompressoren und Abgasturbolader ist mit einem extrem hohen aparativen Aufwand verbunden und dementsprechend kostspielig. Auch die Impulsaufladung fordert einen relativ hohen aparativen Aufwand, da dort ein Schließorgan zum Sperren und Öffnen des Frischlufttrakts mit extrem kurzen Taktzeiten geschaltet werden muss. Die Schwingrohraufladung benötigt einerseits einen relativ großen Bauraum, da für jeden Brennraum zwei unterschiedlich lange Saugrohre bereit gestellt werden müssen. Zum anderen ist die vorteilhafte Aufladungswirkung nur in relativ engen Frequenzbereichen gegeben, die mit entsprechenden Drehzahlen des Kolbenmotors korrelieren. Auch bei der Resonanzaufladung erfolgt die vorteilhafte Aufladungswirkung nur in einem relativ engen Frequenzbereich, also bei einen relativ engen Drehzahlbereich.

Die GB 2 203 400 zeigt ein Beispiel von einer Brennkraftmachine mit aktiver Aufladung.

Die vorliegende Erfindung beschäftigt sich mit dem Problem, für einen Kolbenmotor eine vorteilhafte Möglichkeit zur Aufladung seiner Brennräume anzugeben, die sich insbesondere dadurch auszeichnet, dass die Aufladungswirkung in einem vergleichsweise großen Drehzahlbereich des Kolbenmotors nutzbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Aufladung der einzelnen Brennräume durch gezielte Reflexion von Druckwellen zu verbessern, die bei Ladungswechselvorgängen auftreten. Zu diesem Zweck umfasst eine erfindungsgemäße Reflexionsaufladeeinrichtung zumindest einen Reflektor, der so ausgestaltet und so im Frischlufttrakt angeordnet ist, dass er eine Ladungswechsel-Druckwelle, die bei einem Ladungswechsel in Gegenstromrichtung aus einem Saugrohr austritt, durch Reflexion in eine Reflexions-Druckwelle umwandeln kann, die dann in Stromrichtung in das Saugrohr eintritt. Beim Ladungswechsel entsteht eine Ladungswechsel-Druckwelle, die durch das Schließen des oder der Einlassventile reflektiert wird. Mit Hilfe des Reflektors kann nun diese Ladungswechsel-Druckwelle in den Brennraum zurückgeworfen werden. Hierdurch kommt es zur gewünschten zusätzlichen Aufladung des jeweiligen Brennraums. Das mit Reflexion arbeitende Aufladeprinzip wird im folgenden mit Reflexionsaufladung bezeichnet. Ein besonderer Vorteil der Reflexionsaufladung lässt sich darin sehen, dass die Reflexionsaufladung grundsätzlich über einen großen Drehzahlbereich des Kolbenmotors realisierbar ist. Desweiteren kann eine derartige Reflexionsaufladeeinrichtung vergleichsweise kompakt bauen, was Bauraumvorteile bietet, ebenso lässt sich dadurch eine Gewichtsreduzierung erzielen.

Besonders vorteilhaft ist eine Ausführungsform, bei der die Reflexionsaufladeeinrichtung mit einer Stelleinrichtung ausgestattet ist, mit deren Hilfe der jeweilige Reflektor parallel zur Hauptausbreitungsrichtung der Druckwellen hubverstellbar ist. Eine derartige Stelleinrichtung vereinfacht die Adaption der Reflexionsaufladeeinrichtung an unterschiedliche Drehzahlen des Kolbenmotors. Beispielsweise ist es mit Hilfe einer entsprechend ausgestalteten Stelleinrichtung möglich, einen Abstand zwischen dem jeweiligen Reflektor und dem zugehörigen Saugrohr, z.B. in Abhängigkeit der Drehzahl des Kolbenmotors, statisch einzustellen. Beispielsweise wird der Reflektor bei zunehmender Drehzahl dem Saugrohr zunehmend angenähert. Hierdurch können kürzere Öffnungszeiten der Einlassventile durch verkürzte Druckwellenausbreitungswege berücksichtigt werden. Ebenso ist es bei einer anderen Ausführungsform möglich, die Reflexions-Druckwelle hinsichtlich ihres Aufladungsimpulses zu verstärken. Hierzu kann die Stelleinrichtung so ausgestaltet sein, dass sie den jeweiligen Reflektor zur Reflexion der Ladungswechsel-Druckwelle impulsartig in der Hauptausbreitungsrichtung der Reflexions-Druckwelle hubverstellt. Hierdurch wird die Reflexions-Druckwelle mit zusätzlicher kinetischer Energie versehen, was die Aufladung des jeweiligen Brennraums verstärkt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer erfindungsgemäßen Reflexionsaufladeeinrichtung,
- Fig. 2: eine Ansicht wie in Fig. 1, jedoch bei einer anderen Ausführungsform.

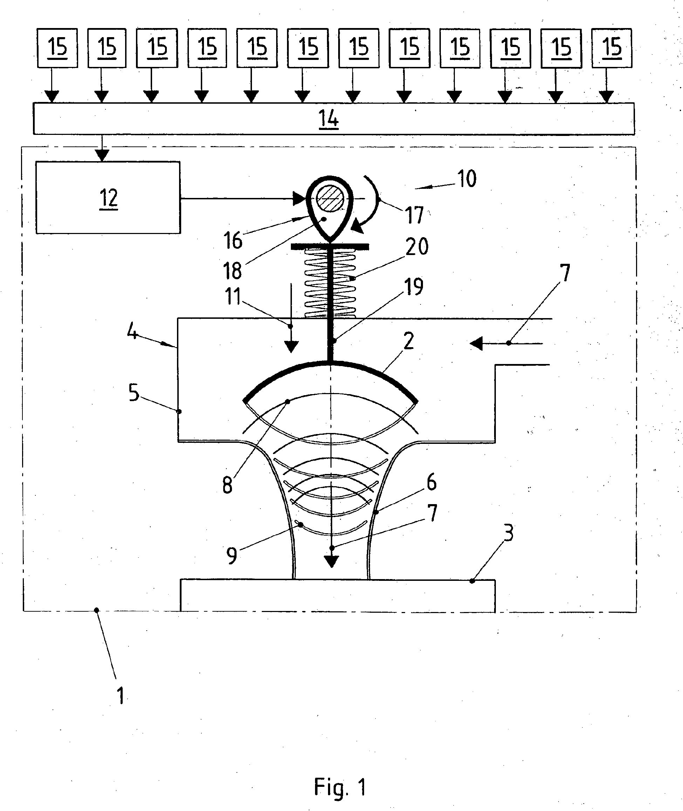

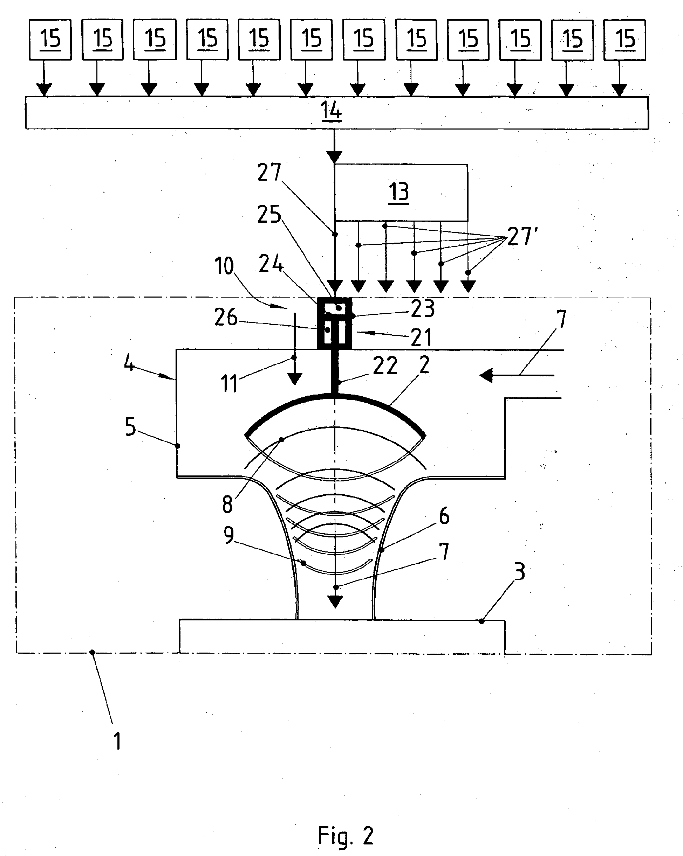

Entsprechend den Fig. 1 und 2 umfasst eine erfindungsgemäße Reflexionsaufladeeinrichtung 1 zumindest einen Reflektor 2. Die Reflexionsaufladeeinrichtung 1 dient zur Verbesserung der Aufladung von nicht gezeigten Brennräumen eines nur teilweise dargestellten Kolbenmotors 3. Die Brennräume des Kolbenmotors 3 werden über einen Frischlufttrakt 4 mit Frischluft versorgt. Der Frischlufttrakt 4 umfasst hierbei einen Frischluftverteiler 5, von dem zumindest ein Saugrohr 6 abgeht und Frischluft einem der Brennräume des Kolbenmotors 3 zuführt. Üblicherweise gehen vom Frischluftverteiler 4 mehre Saugrohre 6 zu unterschiedlichen Brennräumen ab. Entsprechend der hier gezeigten, bevorzugten Ausführungsform weist die Reflexionsaufladeeinrichtung 1 zweckmäßig für jedes Saugrohr 6 einen Reflektor 2 auf. Vorzugsweise sind die Reflektoren 2 dabei im Frischluftverteiler 5 angeordnet. Die Anordnung des jeweiligen Reflektors 2 erfolgt im Frischlufttrakt 4 stromauf des jeweiligen Saugrohrs 6, und zwar so, dass sich der jeweilige Reflektor 2 im wesentlichen fluchtend vor dem zugehörigen Saugrohr 6 befindet.

Während eines Ladungswechselvorgangs strömt im Frischlufttrakt 4 beim Befüllen des jeweiligen Brennraums Frischluft entsprechend Pfeilen 7 in den Frischluftverteiler 5 und über das jeweilige Saugrohr 6 in den jeweiligen Brennraum. Beim Beladen des Brennraums mit Frischluft kommt es dabei zur Ausbildung einer Ladungswechsel-Druckwelle 8, die hier durch Kreisbogensegmente symbolisiert ist, die zum Reflektor 2 hin sinnbildlich konvex gekrümmt sind. Die Ladungswechsel-Druckwelle 8 bewegt sich dabei in Gegenstromrichtung und tritt somit aus dem Saugrohr 6 aus und in den Frischluftverteiler 5 ein. Eine derartige Ladungswechsel-Druckwelle 8 entsteht beim Ladungswechsel beispielsweise dadurch, dass das oder die Einlassventile erst nach einem gewissen Öffnungshub des jeweiligen Kolbens im Brennraum öffnen, wodurch schlagartig ein Unterdruck anliegt, der die Frischluft über das jeweilige Saugrohr 6 aus dem Frischluftverteiler 5 ansaugt und beschleunigt. Hierdurch ergibt sich eine Frischluftsäule, die in den jeweiligen Brennraum einfährt. Diese Frischluftsäule trifft nun beim Schließen des oder der Einlassventile auf dessen/deren Ventilteller und wird an diesem bzw. an diesen reflektiert, was die Ladungswechsel-Druckwelle 8 erzeugt, die in Gegenstromrichtung durch das Saugrohr 6 wieder aus dessen Ansaugtrichter austritt.

Der diesem Saugrohr 6 zugeordnete Reflektor 2 ist bezüglich dieses Saugrohrs 6 so positioniert, dass er besagte Ladungswechsel-Druckwelle 8 in eine Reflexions-Druckwelle 9 umwandelt. Hierbei wird die Ladungswechsel-Druckwelle 8 am Reflektor 2 reflektiert, wobei die Reflexions-Druckwelle 9 gebildet wird. Bei den hier gezeigten Darstellungen ist die Reflexions-Druckwelle 9 durch Kreisbogensegmente repräsentiert, die zum Reflektor 2 hin sinnbildlich konkav gewölbt sind. Die Reflexions-Druckwelle 9 breitet sich in Strömungsrichtung vom Reflektor aus und tritt dadurch wieder in das Saugrohr 6 ein. Durch eine entsprechende Steuerung des oder der Einlassventile kann nun erreicht werden, dass die Reflexions-Druckwelle 9 durch das wieder geöffnete Einlassventil in den Brennraum eintreten kann, um darin das Druckniveau zu erhöhen bzw. um die Ladung zu verbessern. Bevor nun auch die Reflexions-Druckwelle 9 im jeweiligen Brennraum, z.B. am Kolben, erneut reflektiert und aus dem Brennraum ausströmen kann, schließt das jeweilige Einlassventil. Bei diesem Schließen trifft die nächste Luftsäule auf den oder die Ventilteller, und der Vorgang beginnt von vorn. Auf diese Weise bleibt die Ladungsverbesserung mit Hilfe der Reflexions-Druckwelle 9 erhalten.

Entsprechend den hier gezeigten, bevorzugten Ausführungsformen ist die Reflexionsaufladeeinrichtung 1 außerdem mit einer Stelleinrichtung 10 ausgestattet. Die Stelleinrichtung 10 ist so ausgebildet, dass mit ihr der wenigstens eine Reflektor 2 parallel zu einer Hauptausbreitungsrichtung der Druckwellen 8, 9 hubverstellt werden kann. In den Fig. ist ein in Richtung auf das jeweilige Saugrohr 6 gerichteter Hub durch einen Pfeil 11 symbolisiert.

Grundsätzlich kann die Stelleinrichtung 10 so ausgestaltet sein, dass damit für den jeweiligen Reflektor 2 ein gewünschter Abstand zum jeweiligen Saugrohr 6 eingestellt werden kann. Dieser Abstand liegt dann statisch vor und die jeweilige Lastwechsel-Druckwelle 8 wird vom Reflektor 2 dann rein passiv reflektiert. Um hierbei auch bei variierenden Drehzahlen des Kolbenmotors 3 die gewünschte Aufladung erzielen zu können, kann die Stelleinrichtung 10 z.B. in Abhängigkeit der Drehzahl des Kolbenmotors 3 besagten Abstand zwischen Reflektor 2 und Saugrohr 6 variieren. Bei größeren Drehzahlen sind die Öffnungszeiten des jeweiligen Einlassventils relativ kurz, so dass nur wenig Zeit benötigt wird, die Reflektions-Druckwelle 9 rechtzeitig in den Brennraum zu fördern. Hierzu wird der Abstand zwischen Reflektor 2 und Saugrohr 6 verkleinert, so dass nur eine verkürzte Laufzeit für die Druckwellen 8, 9 vorliegt.

Bevorzugt wird jedoch eine Ausführungsform, bei welcher die Stelleinrichtung 10 so ausgestaltet ist, dass sie den jeweiligen Reflektor 2 impulsartig in der Hauptausbreitungsrichtung der Reflexions-Druckwelle 9 Hubverstellen kann: Diese Ausführungsform arbeitet somit dynamisch und ermöglicht insbesondere durch eine entsprechende Abstimmung auf den jeweiligen Ladungswechselvorgang eine aktive Reflexion der Ladungswechsel-Druckwelle 8 am Reflektor 2. Durch eine entsprechende Abstimmung der Hubverstellung des Reflektors 2 auf den Ladungswechselvorgang lässt sich die Ladungswechsel-Druckwelle 8 durch die Reflexion und durch die Impulsübertragung zwischen Reflektor 2 und Druckwelle gezielt verstärken. Die Reflexions-Druckwelle 9 besitzt somit eine höhere Druckamplitude, was die Aufladung des jeweiligen Brennraums verbessert.

Vorzugsweise ist die Stelleinrichtung 10 so ausgestaltet, dass sie den jeweiligen Reflektor 2 in Abhängigkeit der Drehzahl des Kolbenmotors 3 betätigt. Vorzugsweise erfolgt die Betätigung des Reflektors 2, also dessen Hubverstellung, mit derselben Frequenz wie die Betätigung von Gaswechselventilen, insbesondere des wenigstens einen Einlassventils, das dem Brennraum zugeordnet ist, dem auch der Reflektor 2 zugeordnet ist. Die Stelleinrichtung 10 arbeitet somit mit derselben Frequenz wie eine Ventilsteuerung, welche die Gaswechselventile zum Öffnen und Schließen ansteuert. Zweckmäßig betätigt die Stelleinrichtung 10 den jeweiligen Reflektor 2 bezüglich der Gaswechselventile, insbesondere mit Bezug auf das wenigstens eine Einlassventil, phasenverschoben. Die Phasenverschiebung ist dabei gezielt so gewählt, dass sich die gewünschte Verstärkungswirkung bei der Reflexion der Lastwechsel-Druckwelle 8 einstellt. Vorzugsweise wird dabei die Phasenverschiebung in Abhängigkeit der Drehzahl des Kolbenmotors 3 variiert.

Die Stelleinrichtung 10 kann gemäß Fig. 1 mit einer Antriebseinheit 12 oder gemäß Fig. 2 mit einer Betätigungseinheit 13 ausgestattet sein, die zum Antreiben bzw. Betätigen der Stelleinrichtung 10 mit dieser zusammenwirkt. Die Antriebseinheit 12 bzw. die Betätigungseinheit 13 ist ihrerseits mit einer Steuerung 14 gekoppelt. Diese Steuerung 14 der Reflexionsaufladeeinrichtung 1 kann dabei unabhängig von einer Motorsteuerung als separates Bauteil vorgesehen sein. Vorzugsweise ist jedoch die Steuerung 14 in eine derartige Motorsteuerung hardwaremäßig integriert und/oder softwaremäßig implementiert. Die Steuerung 14 kann für die Betätigung der Stelleinrichtung 10 eine Vielzahl von Eingangssignalen 15 berücksichtigen. Beispielsweise berücksichtigt die Steuerung 14 bei der Betätigung der Stelleinrichtung 10, d.h. bei der Hubverstellung des Reflektors 2 zumindest ein Mitglied der folgenden Gruppe: Motordrehzahl, Phasensignal der jeweiligen Ladungswechselventilsteuerung, Lastsignal, Drosselklappenwinkelsignal, Lambdasondensignal, Klopfsensorsignal, Ansauglufttemperatur, Saugrohrdruck, Fahrzeuggeschwindigkeit, Gaspedalstellung, Gaspedalbeschleunigung, Saugrohrschwingung.

Entsprechend Fig. 1 kann die Stelleinrichtung 10 mit wenigstens einer Nockenwelle 16 ausgestattet sein, die über die Antriebseinheit 12 entsprechend einem Pfeil 17 drehend angetrieben ist. Die Nockenwelle 16 trägt zumindest einen Nocken 18, der auf geeignete Weise mit dem Reflektor 2 zu dessen Hubverstellung zusammenwirkt. Beispielsweise ist der Reflektor 2 analog zu einem Nockenwellenantrieb eines Ladungswechselventils mit einem Stößel 19 versehen, der durch die Nocke 18 angetrieben ist. Bei dieser Ausführungsform ist der Stößel 19 mit einer Rückstellfeder 20 ausgestattet, die den Stößel 19 mit daran angebrachtem Reflektor 2 in eine Ausgangslage antreibt. Ebenso kann eine Zwangssteuerung zum Zurückstellen des Reflektors vorgesehen sein.

Die Antriebseinheit 12 kann beispielsweise ein Elektromotor sein, der die Nockenwelle 16 mit gewünschter Drehzahl antreibt. Ebenso ist es grundsätzlich auch möglich, dass die Antriebseinheit 12 durch eine mechanische Kopplung der Nockenwelle 16 mit einer nicht gezeigten Kurbelwelle des Kolbenmotors 3 gebildet ist. Beispielsweise kann die Nockenwelle 16 an einen Zahnriemen, an eine Kette oder an ein Zahnrad angeschlossen sein, der bzw. die bzw. das von der Kurbelwelle angetrieben ist und der beispielsweise zum Antreiben von Nockenwellen einer Nockenwellensteuerung der Gaswechselventile verwendet wird. Ebenso kann die Nockenwelle 16 über den Zahnriemen, die Kette oder das Zahnrad mit besagter Nockenwelle zur Ventilsteuerung antriebsverbunden sein.

Entsprechend Fig. 2 kann die Stelleinrichtung 10 bei einer anderen Ausführungsform für jeden Reflektor 2 ein Kolben-Zylinder-Aggregat 21 aufweisen, das hydraulisch oder vorzugsweise pneumatisch arbeitet. Hierzu ist der Reflektor 2 fest mit einer Kolbenstange 22 verbunden, die in einem Zylinder 23 einen Kolben 24 trägt. Das Kolben-Zylinder-Aggregat 21 kann durch wechselseitiges Beaufschlagen seiner durch den Kolben 24 voneinander getrennten Kammern 25, 26 mit Hydraulikdruck bzw. Pneumatikdruck zum Hubverstellen der Kolbenstange 22 und somit des damit gekoppelten Reflektors 2 betätigt werden. Hierzu ist die Betätigungseinheit 13 beispielsweise als hydraulisches oder pneumatisches Ventil ausgestaltet, das mit einer hier nicht gezeigten, geeigneten Druckquelle verbunden ist. Die Betätigungseinheit 13 kann dabei zum Betätigen mehrerer Kolben-Zylinder-Aggregate 21 genutzt werden, was durch eine entsprechende Anzahl von Pfeilen 27 bzw. 27' in Fig. 2 angedeutet ist. Dabei kann die Betätigungseinheit 13 die unterschiedlichen Reflektoren 2 zugeordneten Kolben-Zylinder-Aggregate 21 grundsätzlich unabhängig voneinander ansteuern. Im Unterschied dazu kann die Nockenwelle 16 zwar mehrere Nocken 18 zum Betätigen mehrerer Reflektoren 2 aufweisen, jedoch bleibt der Phasenwinkel der unterschiedlichen Reflektoren 2 dabei konstant. Insoweit werden bei der Nockenwelle 16 die einzelnen Reflektoren 2 zwar jeweils separat angesteuert, jedoch erfolgen die Betätigungen nicht unabhängig voneinander.

Bei der pneumatisch oder hydraulisch arbeitenden Stelleinrichtung 10 gemäß Fig. 2 kann die Stelleinrichtung 10 grundsätzlich auch so ausgestaltet werden, dass mit dem jeweiligen Reflektor 2 eine Drosselfunktion für das jeweilige Saugrohr 6 realisierbar ist. Hierzu wird beispielsweise der jeweilige Reflektor 2 soweit in Richtung des zugehörigen Saugrohrs 6 hubverstellt, dass sich eine gewünschte Drosselwirkung am Eintritt des jeweiligen Saugrohrs 6 einstellt. Durch die Verwendung der Reflektoren 2 als Einzeldrosseln, kann eine gemeinsame Hauptdrossel, die üblicherweise in einem Frischlufttrakt 4 vorhanden ist, entfallen. Da die Reflektoren 2 bei der erfindungsgemäßen Reflexionsaufladeeinrichtung 1 ohnehin vorhanden sind, kann zumindest bei dieser Ausführungsform auf eine aufwändige Drossel im Frischlufttrakt 4 verzichtet werden.

Vorzugsweise weist der jeweilige Reflektor 2 - wie hier - die Form eines Parabolspiegels auf, der zum jeweiligen Saugrohr 6 hin konkav gewölbt ist. Dabei ist der parabolische Reflektor 2 zweckmäßig rotationssymmetrisch geformt. Außerdem erfolgt die Ausrichtung des jeweiligen Reflektors 2 vorzugsweise so, dass er die jeweilige Reflexions-Druckwelle 9 koaxial zum zugehörigen Saugrohr 6 abstrahlt und fokussiert. Reflektor 2 und Saugrohr 6 sind hierzu fluchtend zueinander ausgerichtet.

Die in den Fig. 1 und 2 gezeigten Ausführungsformen der Stelleinrichtung 10 sind rein exemplarisch und ohne Beschränkung der Allgemeinheit. Insbesondere können auch andere Ausführungsformen für die Stelleinrichtungen 10 realisierbar sein. Beispielsweise ist auch eine Stelleinrichtung 10 denkbar, die mit elektromagnetischen Aktuatoren arbeiten, wie sie beispielsweise bei elektromagnetischen Steuerungen von Ladungswechselventilen bekannt sind.

Zur Aufladung des Brennräume des Kolbenmotors 3 wird erfindungsgemäß eine Reflexionsaufladung durchgeführt. Hierzu wird bei einem Ladungswechselvorgang, eine Ladungswechsel-Druckwelle 8, die in Gegenstromrichtung aus dem jeweiligen Saugrohr 6 austritt, mit Hilfe eines Reflektors 2 durch Reflexion in eine Reflexions-Druckwelle 9 umgewandelt, die in Stromrichtung in das jeweilige Saugrohr 6 eintritt. Durch eine aktive Hubverstellung des Reflektors 2 beim Reflektieren der Ladungswechsel-Druckwelle 8 ergibt sich eine Amplitudenverstärkung der Reflexions-Druckwelle 9. Durch gezielte Abstimmung zwischen der Hubverstellung des Reflektors 2 und dem LadungswechselVorgang wird erreicht, dass die reflektierte Reflexions-Druckwelle 9 rechtzeitig in den Brennraum zurückgelangt, noch bevor das jeweilige Einlassventil bzw. die jeweiligen Einlassventile den Ladevorgang beenden. Der Schließzeitpunkt des jeweiligen Einslassventils wird dabei gezielt so gewählt, dass die Reflexions-Druckwelle 9 noch in den Brennraum gelangen kann, jedoch nicht wieder erneute Reflexion aus dem Brennraum austreten kann.

Es ist klar, dass die erfindungsgemäß vorgeschlagene Reflexionsaufladung grundsätzlich mit anderen Aufladeprinzipien bzw. Aufladesystemen, wie z.B. Schwingrohraufladung, Resonanzaufladung, Impulsaufladung und Aufladung durch einen Lader (Abgasturbolader oder Kompressor), kombinierbar ist.

## Patentansprüche

1. Reflexionsaufladeeinrichtung für einen Kolbenmotor (3), insbesondere in einem Kraftfahrzeug, mit wenigstens einem Reflektor (2), der in einem Frischlufttrakt (4) des Kolbenmotors (3) stromauf eines Saugrohrs (6) des Kolbenmotors (3) so angeordnet ist, dass damit eine Ladungswechsel-Druckwelle (8), die bei einem Ladungswechsel in Gegenstromrichtung aus dem Saugrohr (6) austritt,
**dadurch gekennzeichnet, dass**
der Reflektor (2) fluchtend vor dem zugehörigen Saugrohr (6) positioniert ist,
so dass eine durch eine von einem Ventilteller reflektierte Frischluftsäule erzeugte Ladungswechsel-Druckwelle (8) vom Reflektor (2) in eine Reflexions-Druckwelle (9) umwandelbar ist, die reflektierbar ist und in Strömungsrichtung in das Saugrohr (6) eintritt.

2. Reflexionsaufladeeinrichtung nach Anspruch 1, **dadurch gekennzeichnet,**
**dass** eine Stelleinrichtung (10) zum Hubverstellen des Reflektors (2) parallel zur Hauptausbreitungsrichtung der Druckwellen (8, 9) vorgesehen ist.

3. Reflexionsaufladeeinrichtung nach Anspruch 2, **dadurch gekennzeichnet,**
- **dass** die Stelleinrichtung (10) so ausgestaltet ist, dass die den jeweiligen Reflektor (2) zur Reflexion der Ladungswechsel-Druckwelle (8) impulsartig in der Hauptausbreitungsrichtung der Reflexions-Druckwelle (9) hubverstellt, oder
- dass die Stelleinrichtung (10) so ausgestaltet, dass sie für den jeweiligen Reflektor (2) einen Abstand zum jeweiligen Saugrohr (6) statisch einstellt und insbesondere in Abhängigkeit der Drehzahl des Kolbenmotors (3) variiert.

4. Reflexionsaufladeeinrichtung nach Anspruch 2 oder 3, **dadurch gekennzeichnet,**
- **dass** die Stelleinrichtung (10) so ausgestaltet ist, dass sie den jeweiligen Reflektor (2) mit der selben Frequenz oder mit einem Bruchteil oder einem Vielfachen dieser Frequenz betätigt wie eine Ventilsteuerung des Kolbenmotors (3) Gaswechselventile des Kolbenmotors (3) betätigt, und/oder
- dass die Stelleinrichtung (10) so ausgestaltet ist, dass sie den jeweiligen Reflektor (2) phasenverschoben zu den Gaswechselventilen betätigt, und/oder
- **dass** die Stelleinrichtung (10) so ausgestaltet ist, dass sie die Phasenverschiebung in Abhängigkeit der Drehzahl des Kolbenmotors (3) variiert, und/oder
- **dass** die Stelleinrichtung (10) so ausgestaltet ist, dass sie den jeweiligen Reflektor (2) in Abhängigkeit der Drehzahl des Kolbenmotors (3) betätigt.

5. Reflexionsaufladeeinrichtung nach einem der Ansprüche 2 bis 4, **dadurch gekennzeichnet,**
- **dass** die Stelleinrichtung (10) mit wenigstens einer Nockenwelle (16) ausgestattet ist, die wenigstens einen Nocken (18) aufweist, der zur Hubbetätigung mit dem jeweiligen Reflektor (2) zusammenwirkt, oder
- **dass** die Stelleinrichtung (10) für jeden Reflektor (2) ein hydraulisches oder pneumatisches Kolben-Zylinder-Aggregat (21) aufweist, das zur Hubbetätigung mit dem jeweiligen Reflektor (2) zusammenwirkt.

6. Reflexionsaufladeeinrichtung nach einem der Ansprüche 1 bis 5, **dadurch gekennzeichnet,**
- **dass** der jeweilige Reflektor (2) nach Art eines Parabolspiegels geformt ist, und/oder
- **dass** der jeweilige Reflektor (2) so ausgerichtet ist, dass er die Reflexions-Druckwelle (9) koaxial zum jeweiligen Saugrohr (6) abstahlt und/oder fokussiert.

7. Reflexionsaufladeeinrichtung nach einem der Ansprüche 1 bis 6, **dadurch gekennzeichnet,**
- **dass** für jedes Saugrohr (6) ein separater Reflektor (2) vorgesehen ist, und/oder
- **dass** der jeweilige Reflektor (2) in einem Frischluftverteiler (5) angeordnet ist, von dem das jeweilige Saugrohr (6) abgeht.

8. Reflexionsaufladeeinrichtung nach den Ansprüchen 2 und 7, **dadurch gekennzeichnet, dass** die Stelleinrichtung (10) zum Hubverstellen mehrerer Reflektoren (2) ausgestaltet ist.

9. Reflexionsaufladeeinrichtung nach einem der Ansprüche 1 bis 8, **dadurch gekennzeichnet,**
**dass** die Anordnung des jeweiligen Reflektors (2) so gewählt ist und/oder dass die Stelleinrichtung (10) so ausgestaltet ist, dass die Reflexions Druckwelle (9) ummittelbar vor Einlassende noch in einen dem jeweiligen Saugrohr (6) zugeordneten Brennraum eintritt.

10. Reflexionsaufladeeinrichtung zumindest nach Anspruch 2, **dadurch gekennzeichnet,**
**dass** die Stelleinrichtung (10) so ausgestaltet ist, dass damit der jeweilige Reflektor (2) soweit hubverstellbar ist, dass er als Einzeldrossel für das jeweilige Saugrohr (6) verwendbar ist.

## Claims

1. Reflection supercharging device for a piston engine (3), in particular in a motor vehicle, having at least one reflector (2) which is arranged in a fresh-air tract (4) of the piston engine (3) upstream of an intake pipe (6) of the piston engine (3) in such a way that, by means of said reflector, a charge exchange pressure wave (8) emerges from the intake pipe (6) in a counterflow direction during a charge exchange,
**characterized in that**
the reflector (2) is positioned in an aligned manner in front of the associated intake pipe (6), such that a charge exchange pressure wave (8) generated by a fresh-air column reflected by a valve disc can be converted by the reflector (2) into a reflection pressure wave (9) which can be reflected and enters the intake pipe (6) in a flow direction.

2. Reflection supercharging device according to Claim 1, **characterized in that** a positioning device (10) is provided for the adjustment of the reflector (2) in a stroke movement parallel to the main propagation direction of the pressure wave (8, 9).

3. Reflection supercharging device according to Claim 2, **characterized**
- **in that** the positioning device (10) is designed such that it adjusts the respective reflector (2) for the reflection of the charge exchange pressure wave (8) in a pulsed stroke movement in the main propagation direction of the reflection pressure wave (9), or
- **in that** the positioning device (10) is designed such that it sets a static spacing for the respective reflector (2) with respect to the respective intake pipe (6), and in particular varies said spacing in a manner dependent on the rotational speed of the piston engine (3).

4. Reflection supercharging device according to Claim 2 or 3, **characterized**
- **in that** the positioning device (10) is designed such that it actuates the respective reflector (2) with a frequency which is equal to, or which is a fraction or a multiple of, the frequency with which a valve controller of the piston engine (3) actuates gas exchange valves of the piston engine (3), and/or
- **in that** the positioning device (10) is designed such that it actuates the respective reflector (2) with a phase offset with respect to the gas exchange valves, and/or
- **in that** the positioning device (10) is designed such that it varies the phase offset in a manner dependent on the rotational speed of the piston engine (3), and/or
- **in that** the positioning device (10) is designed such that it actuates the respective reflector (2) in a manner dependent on the rotational speed of the piston engine (3).

5. Reflection supercharging device according to one of Claims 2 to 4, **characterized**
- **in that** the positioning device (10) is equipped with at least one camshaft (16) which has at least one cam (18) which interacts with the respective reflector (2) for the purposes of actuating the stroke movement, or
- **in that** the positioning device (10) has, for each reflector (2), a hydraulic or pneumatic piston-cylinder assembly (21) which interacts with the respective reflector (2) for the purposes of actuating the stroke movement.

6. Reflection supercharging device according to one of Claims 1 to 5, **characterized**
- **in that** the respective reflector (2) is shaped in the manner of a parabolic mirror, and/or
- **in that** the respective reflector (2) is oriented so as to radiate and/or focus the reflection pressure wave (9) coaxially with respect to the respective intake pipe (6).

7. Reflection supercharging device according to one of Claims 1 to 6, **characterized**
- **in that** a separate reflector (2) is provided for each intake pipe (6), and/or
- **in that** the respective reflector (2) is arranged in a fresh-air distributor (5) from which the respective intake pipe (6) extends.

8. Reflection supercharging device according to Claims 2 and 7, **characterized in that** the positioning device (10) is designed for the adjustment of multiple reflectors (2) in stroke movements.

9. Reflection supercharging device according to one of Claims 1 to 8, **characterized**
**in that** the arrangement of the respective reflector (2) is selected, and/or in that the positioning device (10) is designed, such that the reflection pressure wave (9), immediately before the end of the intake phase, also enters a combustion chamber assigned to the respective intake pipe (6).

10. Reflection supercharging device at least according to Claim 2, **characterized in that** the positioning device (10) is designed such that, by means thereof, the respective reflector (2) can be adjusted in a stroke movement to such an extent that it can be used as an individual throttle for the respective intake pipe (6).

## Revendications

1. Dispositif de charge à réflexion pour un moteur à piston (3), en particulier dans un véhicule automobile, comprenant au moins un réflecteur (2) qui est disposé dans un conduit d'air frais (4) du moteur à piston (3) en amont d'un tube d'admission (6) du moteur à piston (3) de telle sorte qu'une onde de pression de changement de charge (8), dans le cas d'un changement de charge dans le sens du contre-courant, sorte ainsi du tube d'admission (6),
**caractérisé en ce que**
le réflecteur (2) est positionné en affleurement avant le tube d'admission associé (6), de telle sorte qu'une onde de pression de changement de charge (8) produite par une colonne d'air frais réfléchie par un plateau de soupape du réflecteur (2) puisse être convertie en une onde de pression de réflexion (9), laquelle peut être réfléchie et pénètre dans le sens de l'écoulement dans le tube d'admission (6).

2. Dispositif de charge à réflexion selon la revendication 1, **caractérisé en ce qu'**un dispositif de commande (10) pour le réglage de la course du réflecteur (2) est prévu parallèlement à la direction de propagation principale des ondes de pression (8, 9).

3. Dispositif de charge à réflexion selon la revendication 2, **caractérisé en ce**
- **que** le dispositif de commande (10) est configuré de telle sorte qu'il règle la course du réflecteur respectif (2) en vue de la réflexion de l'onde de pression de changement de charge (8) sous forme d'impulsion dans la direction de propagation principale de l'onde de pression de réflexion (9), ou
- **que** le dispositif de commande (10) est configuré de telle sorte qu'il ajuste statiquement pour le réflecteur respectif (2) une distance par rapport au tube d'admission respectif (6) et notamment la fasse varier en fonction du régime du moteur à piston (3).

4. Dispositif de charge à réflexion selon la revendication 2 ou 3, **caractérisé**
- **en ce que** le dispositif de commande (10) est configuré de telle sorte qu'il actionne le réflecteur respectif (2) à la même fréquence que, ou avec une fraction ou un multiple de, la fréquence à laquelle une commande de soupape du moteur à piston (3) actionne les soupapes d'échange de gaz du moteur à piston (3), et/ou
- **en ce que** le dispositif de commande (10) est configuré de telle sorte qu'il actionne le réflecteur respectif (2) de manière déphasée par rapport aux soupapes d'échange de gaz, et/ou
- **en ce que** le dispositif de commande (10) est configuré de telle sorte qu'il fasse varier le déphasage en fonction du régime du moteur à piston (3), et/ou
- **en ce que** le dispositif de commande (10) est configuré de telle sorte qu'il actionne le réflecteur respectif (2) en fonction du régime du moteur à piston (3).

5. Dispositif de charge à réflexion selon l'une quelconque des revendications 2 à 4, **caractérisé**
- **en ce que** le dispositif de commande (10) est muni d'au moins un arbre à cames (16) qui présente au moins une came (18) qui coopère avec le réflecteur respectif (2) en vue de l'actionnement de la course, ou
- **en ce que** le dispositif de commande (10) présente pour chaque réflecteur (2) une unité cylindre-piston (21) pneumatique ou hydraulique qui coopère avec le réflecteur respectif (2) en vue de l'actionnement de la course.

6. Dispositif de charge à réflexion selon l'une quelconque des revendications 1 à 5, **caractérisé**
- **en ce que** le réflecteur respectif (2) est formé à la manière d'un miroir parabolique, et/ou
- **en ce que** le réflecteur respectif (2) est orienté de telle sorte qu'il émette et/ou focalise l'onde de pression de réflexion (9) coaxialement par rapport au tube d'admission respectif (6).

7. Dispositif de charge à réflexion selon l'une quelconque des revendications 1 à 6, **caractérisé**
- **en ce qu'**un réflecteur séparé (2) est prévu pour chaque tube d'admission (6), et/ou
- **en ce que** le réflecteur respectif (2) est disposé dans un distributeur d'air frais (5) depuis lequel part le tube d'admission respectif (6).

8. Dispositif de charge à réflexion selon les revendications 2 et 7, **caractérisé en ce que** le dispositif de commande (10) est configuré pour régler la course de plusieurs réflecteurs (2).

9. Dispositif de charge à réflexion selon l'une quelconque des revendications 1 à 8, **caractérisé en ce que**
l'agencement du réflecteur respectif (2) est choisi de telle sorte et/ou **en ce que** le dispositif de commande (10) est configuré de telle sorte que l'onde de pression de réflexion (9) pénètre directement avant l'extrémité d'entrée encore dans une chambre de combustion associée au tube d'admission respectif (6).

10. Dispositif de charge à réflexion selon au moins la revendication 2, **caractérisé en ce que** le dispositif de commande (10) est configuré de telle sorte qu'avec celui-ci la course du réflecteur respectif (2) puisse être réglée de telle sorte qu'il puisse être utilisé en tant qu'étranglement unique pour le tube d'admission respectif (6).
